(19) Europäisches Patentamt / European Patent Office / Office européen des brevets

(11) **EP 3 408 329 B1**

(12) **EUROPÄISCHE PATENTSCHRIFT**

(45) Veröffentlichungstag und Bekanntmachung des Hinweises auf die Patenterteilung:
**21.09.2022   Patentblatt 2022/38**

(21) Anmeldenummer: **17702544.2**

(22) Anmeldetag: **19.01.2017**

(51) Internationale Patentklassifikation (IPC):
**C08L 23/22** $^{(2006.01)}$   **C08L 9/06** $^{(2006.01)}$
**C08K 9/06** $^{(2006.01)}$   **C08K 3/36** $^{(2006.01)}$
**C09C 1/30** $^{(2006.01)}$   **C09C 3/00** $^{(2006.01)}$

(52) Gemeinsame Patentklassifikation (CPC):
(C-Sets verfügbar)
**C08K 3/36; C08K 9/06; C08L 9/06; C09C 1/30; C09C 3/00**   (Forts.)

(86) Internationale Anmeldenummer:
**PCT/EP2017/051113**

(87) Internationale Veröffentlichungsnummer:
**WO 2017/129471 (03.08.2017 Gazette 2017/31)**

(54) **VERFAHREN ZUR PRÜFUNG DER IN SITU SILANISIERUNG VON HELLEN FÜLLSTOFFEN**

METHOD FOR TESTING THE IN SITU SILANIZATION OF LIGHT FILLERS

PROCEDE DE CONTROLE DE LA SILANISATION DE CHARGES CLAIRES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.01.2016   EP 16152537**

(43) Veröffentlichungstag der Anmeldung:
**05.12.2018   Patentblatt 2018/49**

(73) Patentinhaber: **LANXESS Deutschland GmbH 50569 Köln (DE)**

(72) Erfinder:
• **SCHRÖDER, Andreas 69469 Weinheim (DE)**
• **WAWRZINSKI, Lars 68309 Mannheim (DE)**
• **GRÄFF, Ludwig 68519 Viernheim (DE)**
• **SCHILLING, Jürgen 68723 Schwetzingen (DE)**

(56) Entgegenhaltungen:
**EP-A1- 0 911 359     EP-A2- 1 357 156**

• **JAUNICH M ET AL: "Monitoring the vulcanization of elastomers: Comparison of curemeter and ultrasonic online control", POLYMER TESTING, ELSEVIER, AMSTERDAM, NL, Bd. 28, Nr. 1, 1. Februar 2009 (2009-02-01), Seiten 84-88, XP025768223, ISSN: 0142-9418, DOI: 10.1016/J.POLYMERTESTING.2008.11.005 [gefunden am 2008-11-21]**

(52) Gemeinsame Patentklassifikation (CPC): (Forts.)

C-Sets
**C08L 23/22, C08K 9/06, C08L 9/06**

**Beschreibung**

Die Erfindung betrifft das technische Gebiet der Silanisierung von hellen Füllstoffen. Unter hellen Füllstoffen versteht der Fachmann mineralische natürliche und synthetische Füllstoffe, welchen nicht auf Ruß basieren, wie z.B. Glimmer, Kaoline, Kreiden, Calciumcarbonaten, Talk, Zinkoxide, Aluminiumoxide, Titandioxide, Kieselsäure und Silikaten. Zur Verbesserung der Verarbeitbarkeit werden die hellen Füllstoffe durch Silanisierung hydrophobiert, wodurch sich die Eigenschaften der elastomeren Vulkanisate deutlich verbessern. Insbesondere in Kautschukmischungen für Reifenlaufflächen führt die Verwendung von silanisierten Füllstoffen im Vergleich zum schwarzen Füllstoff Ruß zu einer Verbesserung der Nassrutschfestigkeit und des Rollwiderstands, ohne den Abrieb des Reifens zu erhöhen.

Bei der Herstellung von z.B. Reifenlaufflächenmischungen wird die Kieselsäure mit einem Silanisierungsmittel in einem 1. Mischschritt im Kautschuk in einem Innenmischer diskontinuierlich dispergiert. Der Mischprozess wird dabei durch Einstellung der Mischparameter (Drehzahl, Füllgrad, Temperierung, etc.) so gefahren, dass die Auswurftemperatur im Bereich von 140°C bis 160°C liegt. In einem zweiten Mischschritt im Innenmischer wird die Mischung noch einmal im Bereich von 140°C bis 160°C homogenisiert. Unterhalb von 140°C findet keine Reaktion des Silans mit der Kieselsäure statt, oberhalb von 160°C zersetzt sich das Silan (vgl. z.B. F. Röthemeyer, F. Sommer; "Kautschuktechnologie Werkstoffe, Verarbeitung Produkte", Hanser Verlag 2. Überarbeitete Auflage; ISBN 10: 3-446-40480-5; Seite 272). Als Innenmischer kommen in der Gummiindustrie auch Innenmischer mit einem Austragsextruder zur Anwendung. Neben diskontinuierlichen Herstellungsverfahren werden auch kontinuierliche Verfahren mit Extrudern getestet wie in der DE69728538T2 offenbart. Die Silanisierung in einer Kautschukmischung wird als in situ Silanisierung bezeichnet. Dieses ist beispielsweise beschrieben in EP-A-0911359 wie auch in EP-A- 1 357156.

Da die Temperaturen und Mischzeiten bei der in situ Silanisierung exakt eingehalten werden müssen, sind diese Verfahren sehr störanfällig. Prüfungen sollten daher möglichst schnell (inline), volumetrisch und repräsentativ durchgeführt werden. Nur in diesem Fall kann die in situ Silanisierung zuverlässig gesteuert, die thermische Belastung der Kautschukmischung niedrig und die Verfahrenseffizienz hoch gehalten und die Ausschussraten reduziert werden. Dies gilt umso mehr beim kontinuierlichen Verfahren zur in situ Silanisierung, welche sich auch wegen der unzureichenden Möglichkeit der inline Prüfung noch nicht auf dem Markt durchsetzen konnte.

Entgegen den Anforderungen zur Kontrolle der in situ Silanisierung können Messungen von unvernetzten Kautschukmischungen in der Gummiindustrie in der Regel erst mehrere Minuten oder sogar Tage nach der Herstellung der Kautschukmischung, durchgeführt werden (sogenannte offline Verfahren), da die Messungen zeitintensiv sind und eine zeitgleiche Messung von mehreren Proben eine Vielzahl teurer Messaparaturen erfordert. Daher wird die Qualität einer unvernetzten Kautschukmischung bislang lediglich stichprobenartig (< 0,1% der Gesamtmenge) überprüft. Typischerweise wird die Mooney-Viskosität der Stichproben der Kautschukmischung ermittelt, um die Vollständigkeit der Silanisierungsreaktion zu überprüfen (vgl. F. Röthemeyer, F. Sommer; "Kautschuktechnologie Werkstoffe, Verarbeitung Produkte", Hanser Verlag 2. Überarbeitete Auflage; ISBN 10: 3-446-40480-5; Seite 390). Die geringe Anzahl der Stichproben ist jedoch nicht repräsentativ für die gesamte Kautschukmischung. Zudem können die beschriebenen Möglichkeiten der Qualitätskontrolle verfahrensbedingt bislang nicht automatisiert durchgeführt werden, was den Zeitaufwand erhöht.

Für die Analyse von mit Extrudern compoundierten Kunststoffen sind eine Vielzahl repräsentativer inline Qualitätskontrollen bekannt, zum Beispiel NIR, Raman und UV/VIS Spektroskopie, bei denen die Proben durchstrahlt werden (vgl. Hochrein et al., Plastverarbeiter, Sept. 2009, S. 92). Bei Verwendung elektromagnetischer Wellen stört jedoch der Ruß, da die elektromagnetischen Wellen schon bei sehr geringen Anteilen von Ruß nahezu vollständig absorbiert werden. Bei Verwendung von mechanischen Druckwellen im hohen Frequenzbereich > 1 MHz (Ultraschallwellen) stört Ruß hingegen vergeleichsweise wenig. Hier sind jedoch helle Füllstoffe mit einer hohen Dichte wie Kieselsäure, Kaolin oder Kreide störend (vgl. A. Schröder, L. Gräff. L. Wawrzinski , Rubber World 251 (2015) 28), da diese die Ultraschallwellen stärker dämpfen als Ruß mit einer niedrigeren Dichte. Zudem besitzen unvernetzte Kautschuke im Gegensatz zu Kunststoffen aufgrund ihrer viskoelastischen Eigenschaften an sich schon eine relative hohe Dämpfung. Aufgrund dieser hohen Dämpfung gibt es bei volumetrischen Messungen in Transmission eine obere Grenze für den Abstand zwischen dem sendenden und dem empfangenden Ultraschallwandler. Wird diese Grenze überschritten, ist das Signal/Rauschverhältnis zu schlecht um verwertbare Messwerte zu erhalten.

Auf der anderen Seite gibt es eine untere Grenze, da die hochviskose Kautschukmischung noch zwischen den Ultraschallwandlern hindurch fließen muss. So wird in Rubber World 251 (2015) 28 die Verwendung von Ultraschall als inline Qualitätskontrolle für die Detektion von variierenden Anteilen an Füllstoff und Vernetzerbatches mit Markern sowie der Detektion von Verunreinigungen größer als 100 μm und der Makrodispersion von Füllstoffen beschrieben, allerdings nur bis zu einem Anteil von 30 phr an hellen Füllstoffen. Der Anteil an hellen Füllstoffen in Kautschukmischungen für Reifenlaufflächen liegt in der Regel oberhalb von 60 phr, was zu einer Zunahme der Viskosität der Kautschukmischung führt. Zudem wurde die Verwendung von Ultraschall zur Kontrolle einer chemischen Reaktion der in situ Silanisierung weder offenbart noch nahegelegt.

Die Verfolgung einer chemischen Reaktion, nämlich die Vernetzung eines unvernetzten Kautschuks mit Schwefel, wird in M. Jaunich, B. Stark, B. Hoster, Polymer Testing 28 (2009) 84 beschrieben. Hierbei wird jedoch die Änderung der Vernetzungsdichte mit Hilfe der Schallgeschwindigkeit und nicht der relative Schalldämpfungskoeffizient verfolgt. Dabei werden Ultraschallwandler mit einer Mittenfrequenz von f=4 MHz verwendet. Eine Extrusion der Mischung findet nicht statt.

Es bestand daher Bedarf an einem repräsentativen inline Verfahren zur Überprüfung der in situ Silanisierung von hellen Füllstoffen. Das Verfahren sollte eine inline Kontrolle der in situ Silanisierung von hellen Füllstoffen, insbesondere Kieselsäuren erlauben. Dabei sollte mit möglichst geringem Zeitversatz festgestellt werden können, ob und in wie weit die Silanisierung der Füllstoffoberfläche stattgefunden hat. Vorzugsweise sollte das Ergebnis der Qualitätskontrolle spätestens eine Minute nach Austritt aus dem Extruder vorliegen, um so eine umgehende Rückkopplung zur Verfahrenssteuerung zu erlauben und eine Steigerung der Produktivität und/oder eine Verringerung der Ausschussraten des Prozesses zu ermöglichen. Bevorzugt sollte das Verfahren auch eine repräsentative Kontrolle erlauben, d.h. eine Überprüfung von wenigstens 1% der silanisierten hellen Füllstoff enthaltenden Kautschukmischung ermöglichen, vorzugsweise unter Produktionsbedingungen, d.h. bei Durchsätzen von $\geq$ 5 kg/h besonders bevorzugt 50 kg/h. Von besonderem Vorteil wäre dabei ein zerstörungsfrei erfolgendes Verfahren. Um eine Verwendung des Verfahrens bei der Produktion von Kautschukmischungen für Reifen zu ermöglichen wäre es wünschenswert, dass Ruß als zusätzlicher Bestandteil der Kautschukmischung die Qualitätskontrolle nicht oder nur in geringem Umfang stört.

Überraschend wird die Aufgabe gelöst durch ein Verfahren zur Prüfung der Silanisierung von hellen Füllstoffen, wobei eine Mischung enthaltend mindestens einen silanisierten hellen Füllstoff aus der Gruppe der Kieselsäuren, vorzugsweise der gefällten Kieselsäuren, oder der Dual Phase Filler und mindestens einen Kautschuk extrudiert, das dadurch erhaltene Extrudat mit Ultraschallwellen im Frequenzbereich von 4 bis 10 MHz beschallt und die Signalstärke der Ultraschallwellen nach Transmission durch das Extrudat ermittelt wird. Daraus kann die Schallwellenamplitude und/oder Schallwellenintensität der Ultraschallwellen nach Transmission durch das Extrudat bestimmt werden. In einer bevorzugten Ausführungsform wird der relative Dämpfungskoeffizient $\alpha_{rel}$ des Extrudats im Frequenzbereich der Ultraschallwellen bestimmt.

Bevorzugt liegt die Temperatur des Extrudats während der Beschallung oberhalb des Glasübergangsbereiches der Kautschukmischung im Frequenzbereich der Ultraschallwellen. Typischerweise liegt die Temperatur des Extrudats mindestens bei 100°C.

Bevorzugt beträgt der Druck im Extrudat während der Beschallung mindestens 10 bar.

Bevorzugt werden Ultraschallwellen im Frequenzbereich von 5 bis 7 MHz verwendet. Zur Messung können Ultraschalwellen einer oder mehrerer Frequenzen f verwendet werden. Bei der Beaufschlagung mit einem Frequenzspektrum ist die Verwendung von Ultraschallwellen im Bereich von z. B. von 5 bis 7 MHz typischerweise so zu verstehen, dass bei der emittierten Ultraschallfrequenz f das arithmetische Mittel der Grenzfrequenzen, also der unteren und der oberen Frequenz, bei der die Ultraschallwellenamplitude bzw. die Ultraschallwellenintensität 50% des Maximalwerts beträgt, von 5 bis 7 MHz liegt.

Im Sinne der vorliegenden Erfindung kann die Prüfung der Silanisierung sowohl die qualitative Bestimmung der Silanisierung als auch die quantitative Bestimmung des Silanisierungsgrads des Füllstoffs umfassen.

Bei dem Extrudat handelt es sich typischerweise um eine unvernetzte Kautschukmischung, welche vorzugsweise keine Vernetzungsmittel enthält.

Als Kautschuke eignen sich insbesondere Naturkautschuk (NR), Isoprenkautschuk (IR), Styrol-Butadien-Kautschuk (SBR), Butadienkautschuk (BR), Isopren-Isobutylen-Kautschuk (IIR), Polychloroprenkautschuk (CR), Acrylnitril-Butadien-Kautschuk (NBR), hydrierter Acrylnitril-Butadien-Kautschuk (HNBR), carboxylierter Acrylnitril-Butadien-Kautschuk (XNBR), hydrierter carboxylierter Acrylnitril-Butadien-Kautschuk (HXNBR), Ethylen-Propylen-Dien-Kautschuk (EPDM), Ethylen-Propylen-Kautschuk (EPM), Fluorkautschuk (FKM), perfluorierter Fluorkautschuk (FFKM), Acrylat-Ethylen-Kautschuk (AEM), Acrylatkautschuk (ACM), Ethylen-Methylen-Acrylatkautschuk (EMA), chloriertes Polyethylen, chlorsulfoniertes Polyethylen, Ethylen-Vinylacetat-Kautschuk (EVA), Siliconkautschuk, Fluro-Silicon-Kautschuk, Ethylen-Epichlorhydrin Kautschuk (ECO), Epichlorhydrin-Kautschuk (CO) und/oder Polyurethan-Kautschuk (PU). Besonders bevorzugt sind Naturkautschuk (NR), Isoprenkautschuk (IR), Styrol-Butadien-Kautschuk (SBR), Butadienkautschuk (BR),

Bevorzugte helle Füllstoffe im Sinne der Erfindung sind gefällte Kieselsäuren. In einer speziellen Ausführungsform der vorliegenden Erfindung können sogenannte Dual Phase Fillers als heller Füllstoff eingesetzt werden. Dabei handelt es sich um Rußpartikel mit einem einem Anteil von > 5% an Kieselsäuren, welche dem Fachmann bekannt sind.

Der Füllstoffanteil in der Kautschukmischung beträgt typischerweise 50 bis 250 phr, vorzugsweise 60 bis 150 phr und besonders bevorzugt 70 bis 100 phr.

In einer Ausführungsform des erfindungsgemäßen Verfahrens werden die Extrudate mit mindestens einem Paar, vorzugsweise mit mindestens einem Detektionsband von wenigstens zwei Paaren Ultraschallwandlern analysiert. Die jeweiligen Wandler eines Paares sind gegenüberliegend, die Paare sind in Reihe nebeneinander angeordnet. Der Abstand zwischen den Wandlern eines Paares beträgt vorzugsweise mehr als 5 mm bis 30 mm, besonders bevorzugt von 10 bis 25 mm und meist bevorzugt 15 bis 20 mm.

Ein Ultraschallwandler eines Paares fungiert dabei als Sender und der andere Wandler als Empfänger des Ultraschallsignals. Im Sender werden Spannungspulse, generiert in der Prüfelektronik, mit Hilfe des piezoelektrischen Effektes in Ultraschallwellen umgewandelt. Typerweise weist ein Spannungspuls bei der Anregung des Senders die Form eines Rechteckpulse oder eines Nadelpulses auf. Bevorzugt werden mindestens zwei Spannungspulse (Burst-Signal) hintereinander mit einem zeitlichen Abstand ≥ 0,01 μs verwendet, besonders bevorzugt werden mindestens sieben Spannungspulse, ganz besonders bevorzugt werden mindestens vierzehn Spannungspulse verwendet. Besonders bevorzugt entspricht der reziproke zeitliche Abstand zwischen den Spannungspulsen eines Burst-Signales der Eigenfrequenz der verwendeten Ultraschallwandler. Das Aussenden eines Ultraschallsignales bestehend aus einem einzelnen Spannungspuls bzw. aus Burst-Signalen wird bevorzugt mit einer Frequenz von mindestens 1 Hz wiederholt, besonders bevorzugt mindestens 10 Hz. Im Empfänger werden die Ultraschallwellen während der Extrusion nach Durchschallung (Transmission) durch die Kautschukmischung wieder in Spannungssignale umgewandelt und können zeitnah (in weniger als 1 min) ausgewertet werden.

Im Spalt zwischen den Ultraschallwandlern befindet sich das Extrudat. Dabei besteht vorzugsweise ein direkter Kontakt zwischen den Ultraschallwandlern und dem Extrudat.

Der Spalt ist vorzugsweise an den Seiten begrenzt, wodurch ein Fließkanal mit einer Höhe von ≥ 5 mm, besonders bevorzugt mit einer Höhe von ≥ 10 mm ganz besonders bevorzugt mit einer Höhe von ≥ 20 mm entsteht. Vorzugsweise beträgt die Breite des Fließkanals ≥ 20 mm, besonders bevorzugt ≥ 50 mm, ganz besonders bevorzugt ≥ 100 mm. Das Extrudat durchläuft mit einer Geschwindigkeit von vorzugsweise 0,1 m/min. oder mehr, besonders bevorzugt 1 m/min. oder mehr, ganz besonders bevorzugt 10 m/min. oder mehr das Detektionsband. Hierfür wird vorzugsweise ein Extruder verwendet. Dabei wird ein Teil der Kautschukmischung, vorzugsweise ≥ 1%, bevorzugt ≥ 10% besonders bevorzugt 100% der extrudierten Kautschukmischung mit dem Ultraschall analysiert. Auf diese Weise ist eine repräsentative und nicht nur stichprobenartige Qualitätskontrolle von Kautschukmischungen möglich.

In einer Ausführungsform der Erfindung wird die Amplitude der in Spannungssignale umgewandelten Schallwellen in Abhängigkeit der Zeitspanne seit dem Aussenden des Schallsignales im Sender gemessen. Diese sogenannte A-Scans werden in Abhängigkeit der Zeit registriert.

In einer Ausführungsform der Erfindung wird zur Quantifizierung der Signalstärke der Ultraschallwellen aus dem Ultraschallsignal eines A-Scans der Wert einer Ultraschallwellenamplitude, vorzugsweise die maximale Ultraschallwellenamplitude, ermittelt und der Logarithmus der Ultraschallwellenamplitude a gegen die Zeit t dargestellt.

Vorzugsweise wird das Ultraschallsignal eines A-Scans und nicht die Echos des Ultraschallsignales ausgewertet.

In einer weiteren Ausführungsform der Erfindung wird durch Quadrieren der Ultraschallwellenamplitude a die Ultraschallwellenintensität i ermittelt und der Logarithmus der Ultraschallwellenintensität i gegen die Zeit t dargestellt..

Bevorzugt wird der relative Dämpfungskoeffizient $\alpha_{rel.}$ gemäß der Formel (1a)

$$\alpha_{rel.} = (\ln a_{ref.} - \ln a)/x = (\ln i_{ref.} - \ln i)/2x \qquad (1a)$$

aus der Ultraschallwellenamplitude a und der Ultraschallwellenamplitude $a_{ref.}$ einer Referenz und dem Abstand x zwischen den Ultraschallwandlern ermittelt. Alternativ kann der relative Dämpfungskoeffizient $\alpha_{rel.}$ aus der Ultraschallwellenintensität i, Ultraschallwellenintensität $i_{rel}$ einer Referenz und dem Abstand x zwischen den Ultraschallwandlern ermittelt werden.

In einer weiteren Ausführungsform der Erfindung werden die Werte des Ultraschallsignales quadriert und anschließend integriert und so die integrale Ultraschallwellenintensität I ermittelt. Alternativ kann die integrierte Ultraschallwellenamplitude A aus der Quadratwurzel der Ultraschallwellenintensität I ermittelt werden.

Besonders bevorzugt wird der relative Dämpfungskoeffizient $\alpha_{rel.}$ gemäß der Formel (1b) mit Hilfe der integrierten Ultraschallwellen Intensität I und bzw. der integrierten Ultraschallwelenamplitude ermittelt.

$$\alpha_{rel.} = (\ln A_{ref.} - \ln A)/x = (\ln I_{ref.} - \ln I)/2x \qquad (1b)$$

In einer bevorzugten Ausführungsform der Erfindung wird mit Hilfe der Fast Fourier Transformation (FFT) das Frequenzspektrum a(f) des Ultraschallwellenamplitude bzw. der Ultraschallwellenintensität i(f) ermittelt.

Bevorzugt wird der relative Dämpfungskoeffizient $\alpha_{rel.}$ in Abhängigkeit der Frequenz f gemäß der Formel (1c)

$$\alpha_{rel.}(f) = (\ln a_{ref.}(f) - \ln a(f))/2x = (\ln i_{ref.}(f) - \ln i(f))/2x \qquad (1c)$$

aus der Ultraschallwellenamplitude a der Ultraschallwellenamplitude $a_{ref.}$ einer Referenz bzw. aus der Ultraschallwellenintewnsität i der Ultraschallwellenintensität $i_{ref.}$ einer Referenz und dem Abstand x zwischen den Ultraschallwandlern ermittelt.

In einer besonders bevorzugten Ausführungsform der Erfindung wird das Frequenzspektrum in Frequenzbereiche mit einer minimalen Frequenz von $f_{min.}$ und einer maximalen Frequenz $f_{max}$ unterteilt und integriert. Bevorzugt enthalten diese Frequenzbereiche ein Maximum der Ultraschallwellenamplitude bzw. der Ultraschallwellenintensität.

Bevorzugt wird der relative Dämpfungskoeffizient $\alpha_{rel.}$ in Abhängigkeit des Frequenzbereiches von einschließlich $f_{min.}$ bis einschließlich $f_{max.}$ gemäß der Formel (1d)

$$\alpha_{rel.}(f_{min.}, f_{max.}) = (\ln A_{ref.}(f_{min.}, f_{max.}) - \ln A(f_{min.}, f_{max.}))/x$$

$$= (\ln I_{ref.}(f_{min.}, f_{max.}) - \ln I(f_{min.}, f_{max.}))/2x \qquad (1d)$$

aus der Ultraschallwellenamplitude a der Ultraschallwellenamplitude $a_{ref.}$ einer Referenz und dem Abstand x zwischen den Ultraschallwandlern ermittelt.

Alternativ kann der relative Dämpfungskoeffizient $\alpha_{rel.}$ aus der Ultraschallwellenintensität i, Ultraschallwellenintensität $i_{rel}$ einer Referenz und dem Abstand x gemäß der Formel (1b) ermittelt werden.

Bevorzugt wird der relative Dämpfungskoeffizient $\alpha_{rel}$ bei der Eigenfrequenz der Ultraschallwandler ermittelt.

In einer Ausführungsform der Erfindung wird die Signalstärke des Ultraschallwellensignals der Referenz durch die Extrusion einer Kautschukmischung von mindestens 1 kg bei vergleichbaren Prozess- und Messbedingungen während der Extrusion ermittelt. Vergleichbare Prozess- und Messbedingungen während der Extrusion und der Messung liegen dann vor, wenn die Änderungen des Durchsatzes kleiner als 10%, die Änderungen der Temperatur des Extrudats zwischen den Ultraschallwandlern und der Ultraschallwandler kleiner als $< \pm 5$ K und Änderungen des Druckes p im Extrudat zwischen den Ultraschallwandlern kleiner als $< \pm 5$ bar sind. Bevorzugt sind Prozess- und Messbedingungen wenn die Änderungen des Durchsatzes kleiner als 5%, die Änderungen der Temperatur des Extrudates zwischen den Ultraschallwandlern und der Ultraschallwandler kleiner als $< \pm 2$ K und Änderungen des Druckes im Extrudat zwischen den Ultraschallwandlern kleiner als $< \pm 2$ bar sind. Besonders bevorzugt sind Prozess- und Messbedingungen wenn die Änderungen des Durchsatzes kleiner als 2%, die Änderungen der Temperatur des Extrudates zwischen den Ultraschallwandlern und der Ultraschallwandler kleiner als $< \pm 1$ K und Änderungen des Druckes im Extrudat zwischen den Ultraschallwandlern kleiner als $< \pm 1$ bar sind.

Besonders bevorzugt wird als Referenzmischungen eine Kautschukmischung mit gleicher Zusammensetzung verwendet, wie die zu überprüfende Kautschukmischung, wobei bei der Referenzmischung die Silanisierung optimal durchgeführt wurde.

In einer bevorzugten Ausführungsform wird der Abstand x zwischen den Ultraschallwandlern mit Hilfe eines Innentasters mit einer Genauigkeit von besser als 0,1 mm ermittelt.

In einer weiteren Ausführungsform der Erfindung wird zudem der Variationskoeffizient (Coefficient of Variation CV) des Logarithmus der Ultraschallwellenamplitude bzw. der Ultraschallwellenintensität ermittelt. Bevorzugt werden dabei weniger als 1000 Messwerte, besonders bevorzugt weniger als 100 Messwerte ganz besonders bevorzugt weniger als 10 Messwerte verwendet.

In einer bevorzugten Ausführungsform wird neben dem relativen Dämpfungskoeffizienten die Standardabweichung σ des relativen Dämpfungskoeffizienten ermittelt. Bevorzugt werden dabei weniger als < 1000 Messwerte, besonders bevorzugt weniger als 100 Messwerte ganz besonders bevorzugt weniger als 10 Messwerte verwendet.

In einer weiteren Ausführungsform wird neben dem relativen Dämpfungskoeffizienten die Schallgeschwindigkeit Vs des Extrudates gemäß Formel (2) ermittelt.

$$V_S = x/(t_{oF} - t_{US}) \qquad (2)$$

Die Zeitspanne $t_{oF}$ benötigt das Ultraschallsignal vom Zeitpunkt des Ausendens im Sender bis zum empfangen im Empfänger. Die Zeitspanne tus benötigt das Ultraschallsignal in den Ultraschallwandlern. Die Zeitspanne tus wird bei vergleichbaren Temperaturen für Ultraschallwandler wie während der Extrusion ermittelt. Die Ermittlung der Zeitspanne tus erfolgt durch Bestimmung von $t_{oF}$ bei variierendem Abstand x der Ultraschallwandler. Dabei wird bevorzugt die Referenzmischung zwischen den Ultraschallwandlern verwendet. Bevorzugt werden mindestens vier Abstände im Bereich von 5 mm bis 30 mm eingestellt. Die Zeitspanne tus ergibt sich aus dem Achsenabschnitt einer linearen Regression der Auftragung von $t_{oF}$ gegen den Abstand x der Ultraschallwandler.

Ungenügend silanisierte helle Füllstoffe führen zu einer Erniedrigung der Ultraschallwellenamplitude a bzw. der Ultraschallintensität i am Empfänger und einer Erhöhung des relativen Dämpfungskoeffizienten $\alpha_{rel.}$ Die Schallgeschwindigkeit $V_s$ bleibt unverändert. Der Variationskoeffizient CV bzw. die Standardabweichung σ des relativen Schall-

dämpfungskoeffizienetn $\alpha_{rel}$. gibt die Homogenität der Kautschukmischung wieder.

In einer bevorzugten Ausführungsform durchläuft der Kautschuk ein Detektionsband aus einem oder mehreren Ultraschallsensorpaaren, die über die gesamte Breite des Fließkanals angeordnet sind.

In einer besonders bevorzugten Ausführungsform durchläuft die Kautschukmischung zwei Detektionsbänder, die leicht versetzt angeordnet sind. Hierdurch wird gewährleistet, dass die komplette Kautschukmischung analysiert wird.

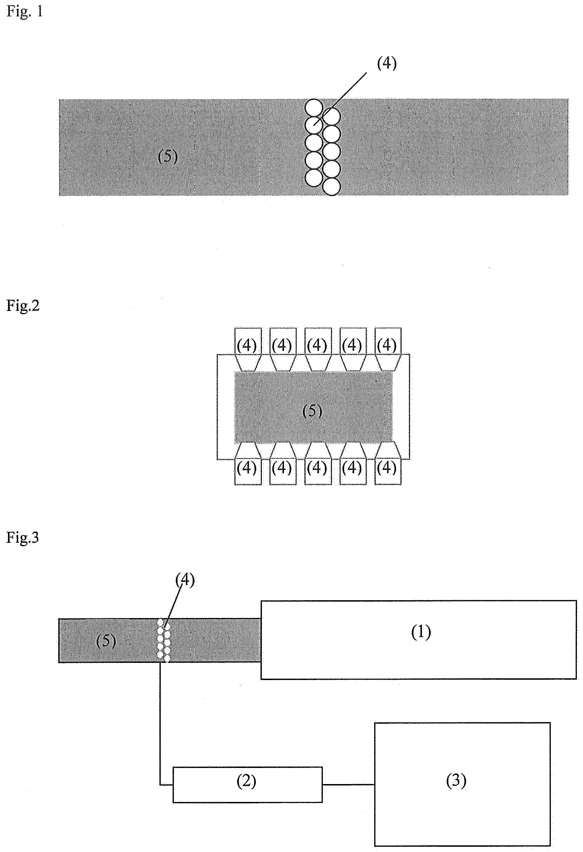

Bevorzugte Ausführungsformen der erfindungsgemäßen Vorrichtung sind in Fig.1 bis Fig. 3 dargestellt. Fig. 1 beschreibt exemplarisch das Detektionsband, bestehend aus den Ultraschallsensorpaaren (4), d.h. pro Paar jeweils ein Sender und ein Empfänger und dem Fließkanal (5) in Aufsicht, in Fig. 2 ist die Anordnung in Fig. 1 in Seitenansicht dargestellt. Fig. 3 zeigt eine Anordnung aus einem Extruder (1), dem Detektionsband, bestehend aus den Ultraschallwandlerpaaren (4) und dem Fließkanal (5) und der Ultraschallprüfelektronik (2) sowie einem Rechner als Auswerteeinheit (3).

Gegenstand der Erfindung ist zudem ein Verfahren zur Herstellung von silanisierte helle Füllstoffe enthaltenden Kautschukmischungen, wobei mindestens ein heller Füllstoff aus der Gruppe der Kieselsäuren, vorzugsweise der gefällten Kieselsäuren oder der Dual Phase Filler mit mindestens einem Kautschuk und mindestens einem Silanisierungsmittel gemischt und silanisiert wird und wobei zumindest ein Teil der erhaltenen Kautschukmischung durch das erfindungsgemäße Verfahren zur Prüfung der Silanisierung geprüft wird. Vorzugsweise werden mehr als 1 Vol.-%, besonders bevorzugt mehr als 10 Vol.-%, meist bevorzugt 100 Vol.-% der erhaltenen Kautschukmischung durch das erfindungsgemäße Verfahren zur Prüfung der Silanisierung geprüft. Das erfindungsgemäße Verfahren kann dabei kontinuierlich oder als Batchverfahren, vorzugsweise kontinuierlich betrieben werden.

In einer weiteren bevorzugten Ausführungsform des erfindungsgemäßen Verfahrens wird der Extruder gleichzeitig als Mischaggregat für die Herstellung der Kautschukmischung, nebst in situ Silanisierung und zur Herstellung des Extrudats gemäß dem erfindungsgemäßen Prüfungsverfahren verwendet. Hierbei wird mindestens je ein heller Füllstoff, ein Silanisierungsmittel und ein Kautschuk dem Extruder zugeführt und in diesem aus dem Silanisierungsmittel und dem hellen Füllstoff der silanisierte Füllstoff gebildet.

Bevorzugt wird als Silanierungsmittel mindestens ein Silan verwendet. Als Silane im Sinne der Erfindung gelten Verbindungen, die Silizium und Wasserstoff sowie weitere Atome anderer chemischer Elemente enthalten. Bevorzugt sind Silane mit Trilalkoxysilygruppen. Weiter bevorzugt sind bifunktionelle Silane, bei denen eine funktionelle Gruppe mit der Oberfläche eines hellen Füllstoffs reagieren kann, z.B. Trialkoxsilygruppen und die andere funktionelle Gruppe an der Vernetzungsreaktion des Kautschuks teilnehmen kann, wie zum Beispiel Vinyl, Thiol, oder Polysulfangruppen.

Ganz besonders bevorzugt sind folgende Silane:
Bis(3-triethoxysilypropyl)tetrasulfid (Si69), Bis(triethoxysilylpropyl)disulfid (Si75), Bis(triethoxysilylpropyl)disulfid (Si266), 3-Thiocyanatopropyltriethoxysilan (Si264), VP Si 363® (von Evonik Industries), Vinylthriethoxysilan, Vinyltris(betamethoxyethoxy)silan, Gammamercaptopropyltrimethoxysilan, Gammaaminopropylthrimethoxysilan, Gammaglycidoxypropylthrimethoxysilan, Aminoethylgammaaminopropyltrimethoxysilan, triaminofunktionelle Silane, Gammachlorpropyltriethoxysilan, Tris(1-methoxyethoxypropyl-2-oxy)vinylsilan.

Bei der Silanisierung handelt es sich um eine chemische Anbindung eines Silans an die Oberfläche des hellen Füllstoffs. Die Anbindung erfolgt durch Kondensationsreaktionen zwischen hydrolysierbaren Gruppen der verwendeten Silane und chemischen Gruppen an der Oberfläche des Füllstoffs. Die Silanisierung des hellen Füllstoffes wird vorzugsweise in einer Kautschukmischung (in situ Silanisierung) bei Temperaturen im Bereich von 140°C bis 160°C durchgeführt. Hierfür werden jeweils mindestens ein Kautschuk, Silan und heller Füllstoff vermischt und einer Temperatur im oben angegeben Bereich ausgesetzt.

Die Kautschukmischung enthält dabei typischerweise 5 bis 15 Gew.-% Silanierungsmittel bezogen auf den Gesamtanteil an hellen Füllstoffen.

Die Kautschukmischungen können dabei weitere Füllstoffe, weitere Additive wie Alterungsschutzmittel, Weichmacher, etc., Vernetzungsmittel, Vulkanisationsbeschleuniger und/oder Vulkanisationsverzögerer und/oder weitere Hilfsmittel enthalten.

Weitere Füllstoffe sind z.B. Kohlenstoff-basierte Füllstoffe, wie z.B. Ruß, Graphit, Carbon Nanotubes, sowie magnetisierbare Füllstoffe wie Carbonyl-Eisenpulver, Eisenoxide, Ferrite und/oder Fasern wie z.B. Aramidfaserpulpe und Kohlefasern.

Als Alterungsschutzmittel sind verfärbende und nicht verfärbende Alterungsschutzmittel, wie z.B. Paraphenylendiamine, Isopropylphenylparaphenylendiamin (IPPD), Para-Phenylen-Diamin (6PPD), N,N-ditoly-p-phenylendiamin (DTPD), etc., Amine, wie z.B. Trimethyl-1,2-dihydrochinolin (TMQ), (Phenyl)amine]-1,4-naphthalendion (PAN), Bis(4-octylphenyl)amin (ODPA), styrolisiertes Diphenylamin (SDPA), Mono- und Bisphenole, wie z.B. 2,2'-Methy)en-bis-(4-methyl-6-tert.butyipheno) (BPH), 2,2'-Isobutyliden-bis-(4,6-dimethyl-phenol) (NKF), 2,2'-Dicyclo-pentadienyl-bis-(4-methyl-6-tert.-butyl-phenol) (SKF), 2,2'-Methylen-bis-(4-methyl-6-cyclohexyl-phenol (ZKF), 2,6-Di-tert.-butyl-p-kresol (BHT), substituiertes Phenol (DS), styrolisierte Phenole (SPH), Mercatobenzimidazole, wie z.B. 2-Mercaptobenzimidazol (MBI), 2-Mercaptomethyl-benzimidazole (MMBI), Zink-4- und -5-methyl-2-mercapto-benzimidazole (ZMMBI) geeignet.

Weichmacher sind z.B. langkettige Ester und/oder Ether, wie Thioester, Phthalsäureseter, Alkylsulfonsäureester, Adipinsäureester, Sebacinsäuresester, Dibenzylether, und/oder Mineralöle (paraffinische, aromatische naphthenische oder synthetische Öle).

Vernetzungsmittel im Sinne der Erfindung sind Netzknotenbildner. Netzknotenbildner sind Moleküle, die zwei einzelne Polymerketten mit einander verbinden können, wie z.B.

- Schwefel (löslich oder unlöslich) und/oder Schwefelspender, wie z.B. Dithiomorpholine (DTDM), Tetramethylthiuramdisulphide (TMTD), Tetraethylthiuramdisulphid (TETD), Dipentamethylenthiuramterasulphide (DPTT), Phosphorylpolysulfide, wie z.B. Rhenocure® SDT/S der Firma Rhein Chemie Rheinau GmbH und/oder
- Peroxide, wie z.B. Di-tert.Butyl-Peroxide, Di-(tert,Butyl-Peroxy-Timethyl-Cyclohexane, Di-(tert.-Butyl-peroxy-isopropyl)benzene, Dicumylperoxide, Dimethyl-di(tert.butyl-Peroxy)hexin, Butyl-Di-(tert,Butyl-Peroxy-)valerat,
- Resorcinol, Aldehyd-Amin-Kondensationsprodukte, wie z.B. Hexamethylentetramin, Resorcinol-Formaldehyd-Vorkondensate und/oder Vulkanisationsharze, wie zum Beispiel Halomethylphenolharz,
- Chinondioxime
- Bisphenole.

Beschleuniger, sind beispielsweise:

- Carbamate bzw. Triazine, wie z.B. Hexamethylendiamincarbamat (HMDC), organische Triazine,
- Thiazole, wie z.B. 2-Mercaptobenzothiazol (MBT), Zinkmercaptobenzothiazol (ZnMBT), Thiadiazole (TDD),
- Sulfenamide, wie Cyclohexyl-benzothiazol-Sulphenamide (CBS), Di-benzothiazyl-disulphid (MBTS), Butyl-benzothiazole-Sulphenamide (TBBS), Dicyclohexyl-Benzothiazol-Sulphenamid (DCBS), 2-(4-Morpholinylmercapto)-benzothiazol (MBS),
- Thiurame, wie Tetramethyl-thiuram-monosulphid (TMTM), Tetraethyl-thiuram-disulphid (TETD), Tetramethyl-thiuram-disulphid (TMTD), Tetrabenzylthiuram Disulphid (TBTD), Dipentamethylene-Thiuram-Tetra(Hexa)-Sulphid (DPTT),
- Dithiocarbamate, wie Zn-Dimethyldithiocarbamate (ZDMC), Cu-Dimethyldithiocarbamate, Bi- Dimethyldithio-carbamate, Zn-Diethyldithiocarbamate (ZDEC), Tellurdiethyldithio-carbamate (TDEC), Zn-Dibuthyldithiocarbamate (ZDBC), Zn-Ethyl-Phenyl-Dithiocarbamate (ZEPC), Zn-Dibenzyl-Dithiocarbamate (ZBEC), Ni-Dibuthyl-Dithiocarbamate (NBC), Selendiethyldithiocarbamate (SeEDC), Selendimethyldithiocarbamate (SeDMC), Tellurdiethyldithiocarbamate (TeEDC),
- Thiophosphat- und Dithiophosphat, wie z.B. Zink-O,O-di-n-butyl-dithiophosphat (ZBDP), Zink-O-butyl-O-hexyl-dithiophosphat, Zink-O,O-diisooctyl-dithiophosphat (ZOPD), Dodecylammonium-diisooctyl-dithiophosphat (AOPD), wie z.B. die Rhenogran®-Typen ZDT, ZAT, ZBOP der Firma Rhein Chemie Rheinau GmbH,
- Harnstoff/Thioharnstoffe, wie z.B. Ethylenthioharnstoff (ETU), N,N,N'N'-Tetramethylthioharnstoff (TMTU), Diethylthioharnstoff (DETU), Dibutylthioharnstoff (DBTU), 3-(3,4-Dichlorphenyl)-1,1-dimethylharnstoff (Diuron) etc., und/oder
- Xanthogenatbeschleuniger, wie z.B. Zinkisopropylxanthogenat (ZIX),
- Guanidine, wie z.B. Diphenylguanidin (DPG) und/oder N',N-di-ortho-tolyl-Guanidin (DOTG) und die Guanidine-frei Ersatzbeschleuniger, wie Rhenogran ® XLA 60,

Vulkanisationsverzögerer, sind z.B. N-Nitrososdiphenylamin, N-Cylcohexylthiophthalimid (CPT), z.B. Vulkalent® G), Sulfonamidderivate (z.B. Vulkalent® E/C), Phthalsäureanhydrid (z.B. Vulkalent® B/C), oder Benzoesäureanhydrid.

Hilfsmittel sind z.B. Dispergierhilfsmittel, wie z.B. Fettsäuren, Stearinsäure, Ölsäure, Aktivatoren wie zum Beispiel Zinkoxid, Bleioxid, Bismuthoxid, Lithiumcarbonat, Natriumcarbonat und/oder Calciumhydroxid, Magnesiumoxid, Flammschutzmittel wie Antimonoxid, etc.

Die vorgenannten Füllstoffe, Additive, Weichmacher, Vernetzungsmittel, Vulkanisationsseschleuniger und/oder Vulkanisationsverzögerer, Hilfsmittel usw. sind dem Fachmann vertraut und können auch in granulierter Form, z.B. als polymergebundene Additive oder als die in EP2314442A beschriebenen Vernetzerbatches eingesetzt werden.

Die Kautschukmischungen können weiterverarbeitet werden beispielsweise zu Masterbatches, Grundmischungen und vernetzbaren Kautschukmischungen.

Masterbatches haben typischerweise einen hohen Anteil an Additiven bezogen auf Kautschuk und enthalten beispielsweise:

2,5 bis 90 Gew.-% Kautschuk
0 bis 50 Gew.-% Weichmacher
2 bis 80 Gew.-% silanisierte helle Füllstoffe
0 bis 20 Gew.-% Dispergierhilfsmittel

0 bis 10 Gew.-% Silan

Grundmischungen sind Kautschumischungen, denen vor der praktischen Anwendung nur noch Vernetzungsmittel und ggf. Vulkanisationsbeschleuniger zugesetzt werden müssen, beispielsweise:

100 phr Kautschuk
0 bis 100 phr Weichmacher
0 bis 200 phr Füllstoffe, davon mindestens 10% silanisierte helle Füllstoffe
0 bis 30 phr Hilfsmittel und
0 bis 10 phr Alterungsschutzmittel.

Vernetzbare Kautschukmischungen sind Kautschukmischungen, die zusätzlich 0.01 bis 20 phr Vernetzungsmittel und optional Vulkanisationsbeschleuniger und Vulkanisationsverzögerer enthalten.

Besonders bevorzugt sind vernetzbare Kautschukmischungen, die unter anderen 30 bis 110 phr Ruß und gefällte Kieselsäure, 3 bis 9 phr Silan, 2 bis 7 phr Zinkoxid sowie 0,5 phr bis 4 phr Schwefel und 1 bis 5 phr Beschleuniger enthalten.

Die Erfindung umfasst auch ein Verfahren zur Herstellung von vernetzbaren, silanisierten hellen Füllstoff enthaltenden Kautschukmischungen in dem vor, während und/oder nach der Herstellung der erfindungsgemäßen Kautschukmischung ein oder mehrere Vernetzungsmittel zugefügt werden. Die Vernetzungsmittel können also vor, während und/oder nach dem Mischen des hellen Füllstoffs mit Silanisierungsmittel und Kautschuk zugefügt werden.

Die Herstellung der Masterbatches, der Grundmischung und der vernetzbaren Kautschukmischung erfolgt vorzugsweise nach den, dem Fachmann geläufigen Verfahren, wie beispielsweise beschrieben in PCT/EP2009/058041. Füllstoffe, Hilfsmittel, Vernetzungsmittel und/oder Alterungsschutzmittel werden dabei zusammen mit dem Kautschuk in einem Mischaggregat vermischt. Geeignete Mischaggregate sind zum Beispiel Innenmischer, Walzwerke, Extruder. Besonders geeignet sind Innenmischer mit Austragsextruder.

In einer weiteren Ausführungsform der Erfindung wird in einem ersten Schritt die Grundmischung in einem Mischaggregat hergestellt. Dabei können Temperaturen von mehr als 140°C bis 160°C erreicht werden. In einem zweiten Herstellungsschritt werden nach Abkühlen der Grundmischung auf Temperaturen kleiner 130°C Vernetzungsmittel zur Grundmischung in einem weiteren Mischaggregat hinzugegeben. Ein Teil der Vernetzungsmittel, Vulkanisationsbeschleuniger und/oder Vulkanisationsverzögerer kann dabei schon im ersten Herstellungsschritt zur Grundmischung hinzugegeben werden.

In einer weiteren bevorzugten Ausführungsform wird die Grundmischung im ersten Schritt in einem Mischaggregat hergestellt. Dabei können Temperaturen von mehr als 140°C bis 160°C erreicht werden. In einem zweiten Schritt wird die Mischung homogenisiert Dabei können ebenfalls Temperaturen von mehr als 140°C bis 160°C erreicht werden. In einem dritten Herstellungsschritt werden nach Abkühlen der Grundmischung auf Temperaturen kleiner 130°C Vernetzungsmittel zur Grundmischung in einem weiteren Mischaggregat hinzugegeben. Ein Teil der Vernetzungsmittel, Vulkanisationsbeschleuniger und/oder Vulkanisationsverzögerer kann dabei schon im ersten oder zweiten Herstellungsschritt zur Grundmischung hinzugegeben werden.

Besonders bevorzugt sind dabei kontinuierliche Verfahren, bei denen die Masterbatche, Grundmischungen oder auch die vernetzbaren Kautschukmischungen in einem oder mehreren Prozessschritten mit einem oder mehreren Extrudern hergestellt werden.

Ganz besonders bevorzugt ist das in DE-A-102008040138 beschriebene Herstellungsverfahren für vernetzbare Kautschukmischungen, in dem die Grundmischung in mindestens einem diskontinuierlichen Kneterprozess hergestellt wird, und Vernetzungsmittel in Form der in beschriebenen EP-A-2314442 beschriebenen Vernetzerbatche zur Grundmischung hinzugefügt werden und die Vernetzerbatche in einem kontinuierlichen Prozess mit einem Extruder mit der Grundmischung vermischt werden.

Weiterhin betrifft die Erfindung ein Verfahren zur Herstellung von Vulkanisaten umfassend die erfindungsgemäße Herstellung von vernetzbaren, silanisierte helle Füllstoffe enthaltenden Kautschukmischungen und die nachfolgende Vulkanisation bei einer Temperatur im Bereich von 100 °C bis 200 °C.

Ebenfalls mitumfasst von der Erfindung ist die Verwendung von Messvorrichtungen zur Bestimmung der Ultraschallwellenamplitude a, integrierten Ultraschallwellenamplitude A und/oder der Ultraschallwellenintensität i, der integrierten Ultraschallwellenamplitude I einer oder mehreren Frequenzen in einem Bereich von 4 bis 10 MHz, vorzugsweise von 5 bis 7 MHz für das erfindungsgemäße Prüfverfahren, für die erfindungsgemäßen Herstellungsverfahren von Kautschukmischungen im allgemeinen und vernetzbaren Kautschukmischungen im speziellen. Vorzugsweise umfasst dies auch die Verwendung der genannten Messvorrichtungen zur Bestimmung des relativen Dämpfungskoeffizienten $\alpha_{rel}$ bei den oben genannten Verfahren.

Somit stellt die vorliegende Erfindung ein Verfahren zur Überprüfung der Silanisierung, zur Verfügung, welches eine inline Kontrolle der in situ Silanisierung von hellen Füllstoffen, insbesondere gefällten Kieselsäuren erlaubt. Dadurch wird eine kontinuierliche in situ Silanisierung bei der Herstellung von silanisierten hellen Füllstoffen enthaltenden Kautschukmischungen und eine repräsentative Kontrolle der Kautschukmischung unter Produktionsbedingungen ermöglicht. Das Verfahren arbeitet zudem zerstörungsfrei und weist eine hohe Toleranz für Ruß als zusätzlichem Bestandteil der Kautschukmischung auf.

Die nachfolgenden Beispiele, Abbildungen und Figuren dienen der Erläuterung der Erfindung, ohne dabei limitierend zu wirken.

**Beispiele:**

Die Komponenten einer typischen Kautschukmischung für Reifenlaufflächen gemäß Tabelle 1 wurden bereitgestellt.

Tabelle 1: Rezeptur einer typischen Kautschukmischung für Reifenlaufflächen

| Handelsname | | | Dichte [g/cm$^3$] | Menge [phr] |
|---|---|---|---|---|
| Buna CB 24 | Butylkautschuk | Lanxess Deutschland GmbH | 0,91 | 30 |
| Buna VSL 5025-2 HM | Lösungs-Styrol-Butadien-Kautschuk | Lanxess Deutschland GmbH | 0,95 | 70 |
| CB N-330 | Ruß | | 1,8 | 5 |
| Ultrasil GR 7000 | Kieselsäure | Evonik Industries AG | 2 | 90 |
| ASM-TMQ | 2,2,4-Trimethyl-1,2-dihydrochinolin | | 1,1 | 1,5 |
| ASM-6PPD | N-1,3-Dimethylbutyl-N'-phenyl-p-phenylendiamin | | 1 | 2 |
| Stearinsäure | | | 0,89 | 1 |
| Zinkoxid WS | | Norzinco GmbH | 5,6 | 2 |
| Si-69 | Bis-(triethoxy-silyl-propyl)-tetrasulfid | Evonik Industries AG | 0,866 | 10 |

Diese Komponenten wurden gemäß der Mischvorschrift in Tabelle 2 in verschiedenen Chargen gemischt.

Tabelle 2: Mischvorschrift

| Zeit | Mischungsbestandteil | Bemerkung |
|---|---|---|
| 0-0,75' 0,75'-1'20" 1'20" 2' 3,5' 5' | Polymere Kieselsäure + Si69 + ZnO Alterungsschutzmittel + Stearinsäure | Stempel oben Stempel ab kehren Auswurf |

Bei den Chargen R1M1 bis R5M2 wurden die Mischparameter Drehzahl und Vorlauftemperatur variiert gemäß Tabelle 3.

Tabelle 3: Gemischte Chargen einer typischen Kautschukmischung aus Tabelle 1

| | | 1. Mischstufe | | | | 2. Mischstufe |
|---|---|---|---|---|---|---|
| Batch | | **R1M1** | **R2M1** | **R3M1** | **R4M1** | **R5M2** |
| **Mischparameter** | | | | | | |
| Füllgrad | [%] | 70 | 70 | 70 | 70 | 70 |
| Drehzahl | [U/min.] | 70 | 40 | 40 | 40 | 70 |
| Vorlauftemperatur | [°C] | 70 | 70 | 50 | 40 | 70 |

(fortgesetzt)

| | | 1. Mischstufe | | | | 2. Mischstufe |
|---|---|---|---|---|---|---|
| Mischzeit | [min.] | 5 | 5 | 5 | 5 | 3 |
| Energieeintrag | [W] | 135 | 134 | 149 | 146 | 110 |
| Auswurftemperatur $T_A$ | [°G] | 147 | 126 | 117 | 112 | 142 |

Die Mischung wird, wie in Tabelle 3 angegeben, im 1,5 l Innenmischer (Intermesh) der Firma Gumix S.A. für 5 min. gemischt. Die Kautschukmischung enthält dabei u.a. Kieselsäure und Silan, sowie etwas Ruß.

Das Silan reagiert oberhalb von 140°C mit der Kieselsäureoberfläche. Unterhalb von 140°C findet keine Reaktion statt. Durch die verschiedenen Mischparameter werden unterschiedliche Werte für die Auswurftemperatur $T_A$ unterhalb (Charge R2M1 bis R4M1) und oberhalb (Charge R1M1 und R5M2) von 140°C erreicht. Die Charge R5M2 wurde zudem noch ein zweites Mal im Innenmischer gemischt, um die Reaktion zu vervollständigen (R5M2). Dies entspricht einem typischen Verfahren für in situ Silanisierungen in der Reifenindustrie. Nach dem Mischprozess im Innenmischer wurden die Mischungschargen auf einer Doppelwalze Firma Rubicon Gummitechnik und Maschinentechnik GmbH bei einer Temperierung von 50°C homogenisiert (dreimal links und dreimal rechts eingeschnitten) und zu einem Mischungsfell ausgezogen. Aus dem Fell wurden Streifen geschnitten. Diese Streifen wurden zu einem Einwellenextruder EEK32.12L der Firma Rubicon Gummitechnik und Maschinentechnik GmbH mit geringer Mischwirkung gefüttert. Am Ausgang des Extruders befindet sich ein Sensorkopf, ausgestattet mit zwei gegenüberliegenden Ultraschallwandlern mit einem Abstand von 10 mm, zudem ein Temperatursensor T1 mit einem Schwert das in den Mischungsfluss hinein ragt und ein Druck-/Temperatur-Sensor. Dieser Temperatursensor misst den Druck p und die Temperatur T2 an der Kautschuk-Metall-Grenzfläche. Der Fließkanal im Sensorkopf hat eine Breite von 20 mm und eine Höhe von 10 mm. Der Durchmesser der Ultraschallwandler beträgt 8 mm. Sensorkopf und Extruder wurden bei 120°C temperiert.

Die Schneckendrehzahl betrug 20 U/min. Dies entspricht einem Durchsatz von ca. 1 kg Kautschukmischung pro 10 min.

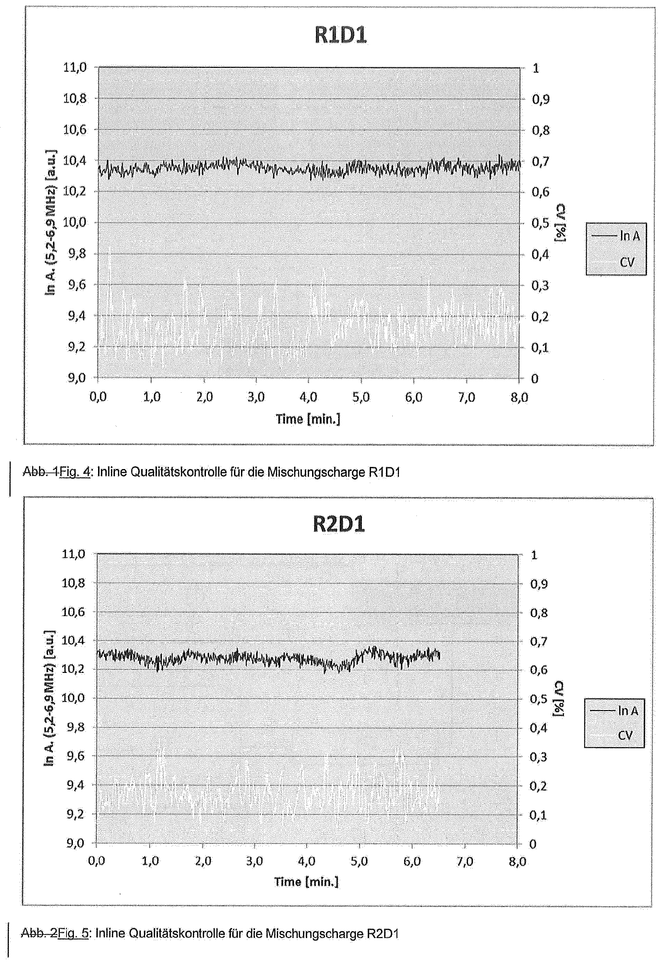

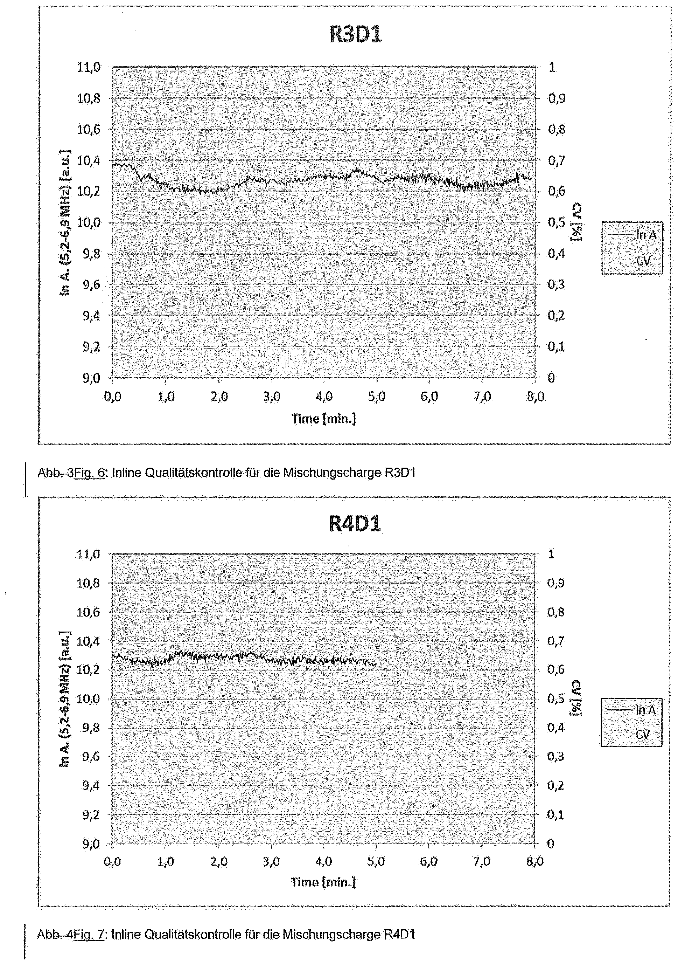

Die inline Qualitätskontrolle wurde mit einem Paar von Ultraschallwandlern K6V1 der Firma GE Sensing & Inspection Technologies GmbH in Transmission durchgeführt. Die Ultraschallwandler wurden mit der Prüfelektronik PCM 100LAN der Firma Inoson GmbH angesteuert. Es wurden 10 bis 40 Ultraschallpulse pro Sekunde mit Hilfe des piezoelektrischen Effektes im Ultraschallwandler erzeugt. Der Ultraschallwandler wandelt die Spannungspulse in Ultraschallsignale um. Dabei wurden die Ultraschallwandler mit 7 Bursts bei der Eigenfrequenz der Ultraschallwandler von 6 MHz angeregt. Der Ultraschallpuls des Transmitters wandert durch die extrudierte Kautschukmischung und wird dabei durch die Kautschukmischung gedämpft. Die Schwingungsamplitude a des Ultraschallsignales wird erniedrigt. Der Receiver empfängt das Schallsignal und wandelt es in ein Spannungssignal um. Das Spannungssignal wird von der Hardware des PCM100LAN mit 32,45 dB verstärkt und zu einem Rechner geleitet. Mit Hilfe des Rechners wird der erste Schallpuls des sogenannten A-Scans mit der sogenannten Fast Fourier Transformation (FFT) ausgewertet. Das so erhaltene Amplitudenspektrum a(f) in Abhängigkeit der Ultraschallfrequenz f wurde bei fünf unterschiedlichen Frequenzbereichen (vgl. Tabelle 4) integriert und logarithmiert. Die so erhaltenen Werte ln A($f_{min.}$,$f_{max.}$) für das logarithmierte Integral werden für die verschiedenen Mischungschargen R1M1 bis R4M1 und R5M2 in Abhängigkeit der Zeit t aufgezeichnet. Dies geschieht noch vor Austritt der Mischung aus dem Sensorkopf am Ausgang des Extruders. Die Verweilzeit der Mischung im Sensorkopf betrug weniger als 1 Minute. Das Ergebnis für den Frequenzbereich $f_{rmin.}$ = 5,2 MHz bis $f_{rmax.}$ = 6,9 MHz ist für jede Mischungscharge in den Fig. 4 bis 8 dargestellt. Zusätzlich ist der Variationskoeffizient CV zu den Werten ln A($f_{min.}$,$f_{max.}$) für 50 Messpunkte angegeben. Der Variationskoeffizient CV ist ein Maß für die Mischungsgüte.

Aus den Werten für ln A($f_{min.}$,$f_{max.}$) wird der relative Dämpfungskoeffzient $\alpha_{rel.}$ ($f_{min.}$,$f_{max.}$) nach dem Lambert Beer'schen Gesetz berechnet.

$$\alpha_{rel.} (f_{min.},f_{max.}) = (\ln A_{ref.} (f_{min.},f_{max.}) - \ln A(f_{min.},f_{max.})/x \quad (1d)$$

Hierbei ist x der Abstand zwischen den Ultraschallwandlern. In Gl. (1d) ist der Mittelwert von ln $A_{ref.}$($f_{min.}$,$f_{max.}$) der Referenzmischung R5M2 (Standardmischverfahren) für eine Zeitspanne für die Extrusion von Δt = 5 min.. In Tabelle 4 sind die Mittelwerte für den relativen Dämpfungskoeffizient $\alpha_{rel.}$($f_{min.}$,$f_{max.}$) für eine Zeitspanne von Δt = 4 min bis Δt = 8 min. für die Extrusion für jede Mischungscharge dargestellt. Zudem wurde die Standardabweichung σ der relativen Dämpfungskoeffizienten $\alpha_{rel.}$($f_{min.}$,$f_{max.}$) nach Gl. (1d) ermittelt. Außerdem ist der Mittelwert des Drucksensors p und die Mittelwerte für der Temperatursensor T1 mit Schwert und T2 ohne Schwert angegeben. Die Schallgeschwindigkeit Vs wird aus dem Abstand x und der Zeit $t_{oF}$ bis zur ersten Spannungsamplitude ermittelt. Dabei muss die Zeit tus = 4,6 µs des Ultraschallschallsignales im Vorlauf der Ultraschallwandler berücksichtigt nach Gl. (2) werden.

$$V_S = x/(t_{oF} - t_{US}) \qquad (2)$$

Zusätzlich zu den Ultraschallkennwerten wurde die Viskosität nach Mooney ML1+4 (100°C) als nicht-repräsentative offline Standard Qualitätskontrolle ermittelt.

Tabelle 4: Messung der extrudierten Chargen aus Tabelle 3

| Extrudierte Charge nach | | 1. Mischstufe | | | | 2. Mischstufe |
|---|---|---|---|---|---|---|
| Batch | | **R1M1** | **R2M1** | **R3M1** | **R4M1** | **R5M2** |
| **Standard Prozesskontrolle** | | | | | | |
| Mooney Viskosität ML1+4 (100°C) | [MU] | 143 | 150 | 151 | nicht messbar | 122 |
| **Messbedingungen** | | | | | | |
| Druck p | [bar] | 31 ± 3 | 34 ± 1 | 35 ± 1 | 38 ± 1 | 34 ± 2 |
| T1 | [°C] | 124 ± 1 | 125 ± 1 | 125 ± 1 | 124 ± 1 | 124 ± 1 |
| T2 | [°C] | 122 ± 1 | 122 ± 1 | 122 ± 1 | 121 ± 1 | 121 ± 1 |
| **Ultraschallkennwerte** | | | | | | |
| $V_s$ Rel. Dämpf.koeff. $\alpha_{rel.}$ | [m/s] | 1214 ± 3 | 1218 ± 2 | 1220 ± 3 | 1222 ± 2 | 1218 ± 3 |
| (1,1 MHz bis 1,7 MHz) | [1/m] | 1 ± 2 | 3 ± 2 | 3 ± 2 | 2 ± 2 | 0 ± 1 |
| (1,7 MHz bis 2,8 MHz) | [1/m] | 3 ± 2 | 4 ± 2 | 3 ± 2 | 2 ± 2 | 0 ± 2 |
| (2,8 MHz bis 4,0 MHz) | [1/m] | 4 ± 2 | 6 ± 2 | 6 ± 3 | 4 ± 2 | 0 ± 2 |
| (4,0 MHZ bis 5,2 MHz) | [1/m] | 5 ± 2 | 9 ± 3 | 9 ± 3 | 9 ± 2 | 0 ± 2 |
| (5,2 MHz bis 6,9 MHz) | [1/m] | 7 ± 3 | 14 ± 3 | 15 ± 4 | 14 ± 2 | 0 ± 2 |

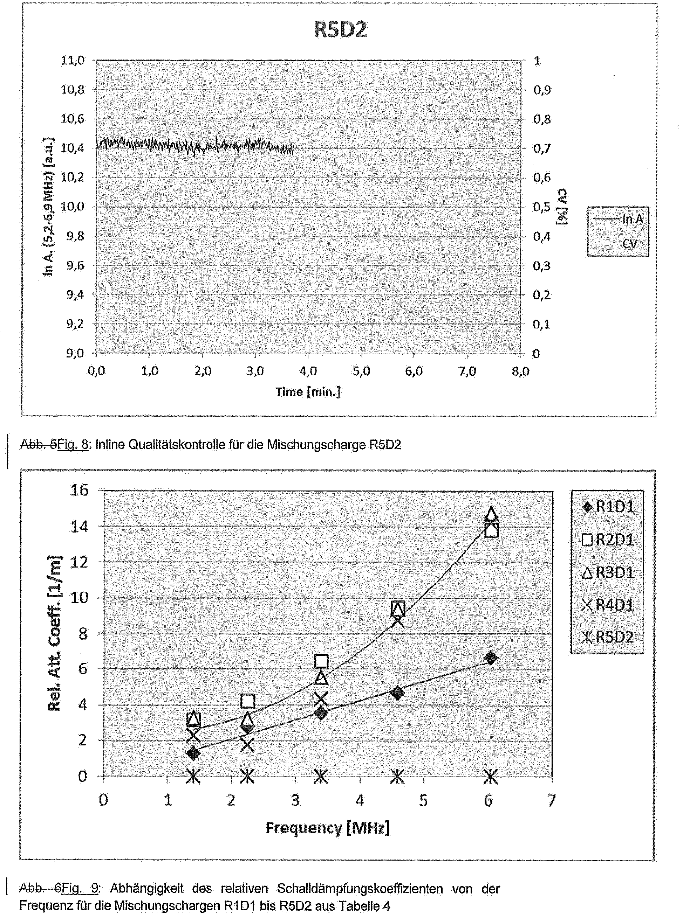

Es zeigt sich in Tabelle 4, dass die Werte für die relative Schalldämpfung αrel. ab 4 MHz der Charge R1M1 signifikant kleiner sind als die Werte der Chargen R2D1, R3M1 und R4M1 (Fig. 9). Die Auswurftemperatur TA der Charge R1M1 liegt oberhalb von 140°C, sodass die Silanisierungsreaktion stattfinden konnte. Die Auswurftemperatur TA der Chargen R2M1, R3M1 und R4M1 lag unterhalb von 140°C, sodass keine Silanisierungsreaktion stattfinden konnte. Unterhalb von 4 MHz ist der Unterschied relativ zur Standardabweichung σ der Werte für dne relativen Schalldämpfungskoeffizient $\alpha_{rel.}(f_{min.}, f_{max.})$ eher gering, sodass keine eindeutige Aussage möglich ist.

Die niedrigen Werte für R1M1 und für R5M2 gegenüber R3M1 und R4M1 können dabei nicht auf eine verbesserte Dispersion des Füllstoffs (hier: die Kieselsäure), wie in A. Schröder, L. Gräff. L. Wawrzinski , Kautschuk Gummi Kunststoffe, 67 (2015), 11, beschrieben, zurückgeführt werden. Darin nimmt mit zunehmender Füllstoffdispersion die Ultraschallamplitude zu, gleichzeitig nimmt der Variationskoeffizient CV ab. Im Gegensatz dazu nimmt der Variationskoeffzient CV der Mischungen R1M1 und R5M2 (in Fig. 4 und Fig. 8) Werte oberhalb von 0,2% an. Die Werte für den Variationskoeffizient der Mischungen R3M1 und R4M1 sind dagegen alle kleiner als 0,2%. Offenbar führt der höhere Energieeintrag während des Knetprozesses für die Chargen R3M1 und R4M1 aufgrund der niedrigeren Temperatur zu einer verbesserten Füllstoffdispersion. Trotzdem sind die Werte für In A.$(f_{min.}, f_{max.})$ der Chargen R3M1 und R4M1 geringer als für R1M1 und R5M2. Da Chargen mit gleicher Zusammensetzung verwendet wurden und keine signifikanten Änderungen der Messbedingungen (gleiche Werte für p, T1, und T2) bei der Inline Qualitätskontrolle beobachtet wurden, können die unterschiedlichen relativen Schalldämpfungskoeffizienten $\alpha_{rel.}(f_{min.}, f_{max.})$ nur mit einer chemischen Reaktion der Kieselsäureoberfläche mit dem Silan erklärt werden.

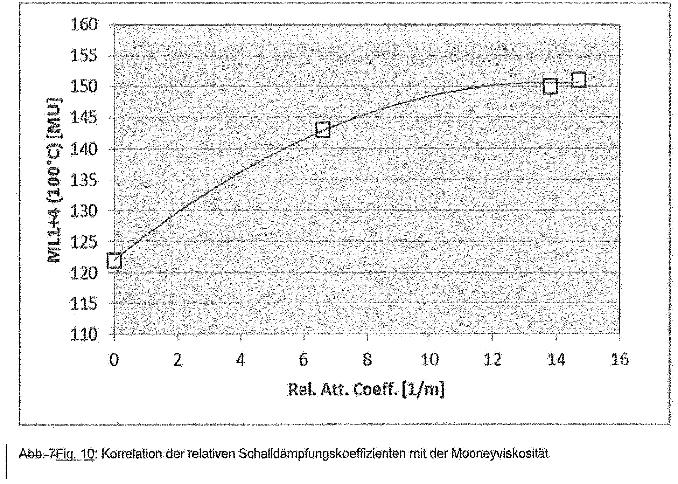

Zudem sinkt der relative Schalldämpfungskoeffizient $\alpha_{rel.}(f_{min.}, f_{max.})$ weiter, wenn die Silanisierung entsprechend dem Standardverfahren σ in einem zweiten Mischschritt vervollständigt wird (Vergleich R1M1 und R5M2). Die Werte für den relativen Schalldämpfungskoeffizient $\alpha_{rel.}(f_{min.}, f_{max.})$ bei einer Frequenz > 4 MHz korrelieren dabei mit den Werten für die Mooney Viskosität ML1+4 (100°C) als offline Standardverfahren zur Qualitätskontrolle für nicht vernetzte Kautschukmischungen (Fig. 10). Dies zeigt offensichtlich, dass die Güte der in situ Silanisierung mit Hilfe der Bestimmung des relativen Schalldämpfungskoeffizienten $\alpha_{rel.}(f_{min.}, f_{max.})$ ermittelt werden kann.

**Patentansprüche**

1. Verfahren zur Prüfung der Silanisierung von hellen Füllstoffen, wobei eine Mischung enthaltend mindestens einen silanisierten hellen Füllstoff aus der Gruppe der Kieselsäuren, vorzugsweise der gefällten Kieselsäuren oder der Dual Phase Filler, und mindestens einen Kautschuk extrudiert, das Extrudat mit Ultraschallwellen in einem Frequenzbereich von 4 bis 10 MHz, vorzugsweise von 5 bis 7 MHz, beschallt und die Signalstärke der Ultraschallwellen nach Transmission durch das Extrudat bestimmt wird.

2. Verfahren gemäß Anspruch 1, wobei der relative Dämpfungskoeffizient $\alpha_{rel}$ des Extrudats in dem Frequenzbereich der Ultraschallwellen bestimmt wird.

3. Verfahren gemäß Anspruch 1 oder 2, wobei zusätzlich der Variationskoeffizient des Logarithmus der Ultraschallwellenintensität oder der Ultraschallwellenamplitude In A ermittelt und zur Kontrolle der Dispergierung des hellen Füllstoffes im Extrudat verwendet wird.

4. Verfahren gemäß einem oder mehreren der Ansprüche 1 bis 3, wobei auch die Standardabweichung des relativen Dämpfungskoeffizient $\alpha_{rel}$ ermittelt und zur Kontrolle der Dispergierung des hellen Füllstoffes im Extrudat verwendet wird.

5. Verfahren gemäß einem oder mehreren der Ansprüche 1 bis 4, wobei der Abstand zwischen einem Sender, der die Ultraschallwellen emittiert und einem Empfänger, der die Ultraschallwellen empfängt mehr als 5 mm beträgt, bevorzugt im Bereich von 10 mm bis 25 mm, besonders bevorzugt von 15 bis 20 mm.

6. Verfahren gemäß einem oder mehreren der Ansprüche 1 bis 5, wobei der Füllstoff in der Kautschukmischung mit 50 bis 250 phr, vorzugsweise 60 bis 150 und besonders bevorzugt 70 bis 100 phr enthalten ist.

7. Verfahren gemäß einem oder mehreren der Ansprüche 1 bis 6, wobei der silanisierte Füllstoff im Extruder aus mindestens einem hellen Füllstoff aus der Gruppe der Kieselsäuren, vorzugsweise der gefällten Kieselsäuren, oder der Dual Phase Filler und mindestens einem Silanisierungsmittel gebildet wird.

8. Verfahren zur Herstellung von silanisierten hellen Füllstoffen enthaltenden Kautschukmischungen, wobei mindestens ein heller Füllstoff aus der Gruppe der Kieselsäuren, vorzugsweise der gefällten Kieselsäuren, oder der Dual Phase Filler mit mindestens einem Kautschuk und mindestens einem Silanisierungsmittel gemischt und silanisiert wird und wobei zumindest ein Teil, vorzugsweise mehr als 1 Vol.-%, besonders bevorzugt mehr als 10 Vol.-%, meist bevorzugt 100 Vol.-% der Kautschukmischung durch das Verfahren gemäß einem oder mehreren der Ansprüche 1 bis 7 geprüft werden.

9. Verfahren gemäß Anspruch 7 oder 8, wobei die Silanisierung bei einer Temperatur von 140 bis 160 °C erfolgt.

10. Verfahren gemäß Anspruch 8 oder 9, wobei das Verfahren kontinuierlich oder als Batchverfahren, vorzugsweise kontinuierlich betrieben wird.

11. Verfahren gemäß einem oder mehreren der Ansprüche 8 bis 10, wobei als Silanisierungsmittel ein Silan, vorzugsweise Bis(3-triethoxysilylpropyl)tetrasulfid verwendet wird.

12. Verfahren zur Herstellung von vernetzbaren, silanisierten hellen Füllstoff enthaltenden Kautschukmischungen, umfassend das Verfahren gemäß einem oder mehreren der Ansprüche 8 bis 11, wobei vor, während und/oder nach der Herstellung der Kautschukmischung ein oder mehrere Vernetzungsmittel zugefügt werden.

13. Verfahren zur Herstellung von Vulkanisaten umfassend die Herstellung von vernetzbaren, silanisierte helle Füllstoffe enthaltenden Kautschukmischungen nach einem Verfahren gemäß Anspruch 12, und eine nachfolgende Vulkanisation bei einer Temperatur im Bereich von 100 °C bis 200 °C.

14. Verwendung von Messvorrichtungen zur Bestimmung der Schallwellenamplitude und/oder Schallwellenintensität bei einer Frequenz der Ultraschallwellen in einem Bereich von 4 bis 10 MHz vorzugsweise von 5 bis 7 MHz für ein Verfahren gemäß einem der Ansprüche 1 bis 13.

15. Verwendung von Messvorrichtungen gemäß Anspruch 14, wobei der Dämpfungskoeffizient im Bereich der Frequenz der Ultraschallwellen bestimmt wird.

**Claims**

1. Method of testing the silanization of light-coloured fillers, wherein a mixture comprising at least one silanized light-coloured filler from the group of the silicas, preferably the precipitated silicas, or the dual-phase fillers, and at least one rubber is extruded, the extrudate is subjected to ultrasound waves within a frequency range from 4 to 10 MHz, preferably from 5 to 7 MHz, and the signal intensity of the ultrasound waves is determined after transmission through the extrudate.

2. Method according to Claim 1, wherein the relative attenuation coefficient $\alpha_{rel}$ of the extrudate is determined in the frequency range of the ultrasound waves.

3. Method according to Claim 1 or 2, wherein the coefficient of variation of the logarithm of the ultrasound wave intensity or of the ultrasound wave amplitude In A is additionally determined and used to monitor the dispersion of the light-coloured filler in the extrudate.

4. Method according to one or more of Claims 1 to 3, wherein the standard deviation of the relative attenuation coefficient $\alpha_{rel}$ is also determined and used to monitor the dispersion of the light-coloured filler in the extrudate.

5. Method according to one or more of Claims 1 to 4, wherein the distance between an emitter that emits the ultrasound waves and a receiver that receives the ultrasound waves is more than 5 mm, preferably in the range from 10 mm to 25 mm, more preferably from 15 to 20 mm.

6. Method according to one or more of Claims 1 to 5, wherein the filler is present in the rubber mixture at 50 to 250 phr, preferably 60 to 150 and more preferably 70 to 100 phr.

7. Method according to one or more of Claims 1 to 6, wherein the silanized filler is formed in the extruder from at least one light-coloured filler from the group of the silicas, preferably the precipitated silicas, or the dual-phase fillers, and at least one silanizing agent.

8. Method of producing rubber mixtures comprising silanized light-coloured fillers, wherein at least one light-coloured filler from the group of the silicas, preferably the precipitated silicas, or the dual-phase fillers, is mixed with at least one rubber and at least one silanizing agent and silanized, and wherein at least a portion, preferably more than 1% by volume, more preferably more than 10% by volume, most preferably 100% by volume, of the rubber mixture is tested by the method according to one or more of Claims 1 to 7.

9. Method according to Claim 7 or 8, wherein the silanization is effected at a temperature of 140 to 160°C.

10. Method according to Claim 8 or 9, wherein the process is conducted continuously or as a batchwise process, preferably continuously.

11. Method according to one or more of Claims 8 to 10, wherein the silanizing agent used is a silane, preferably bis(3-triethoxysilypropyl) tetrasulfide.

12. Method of producing crosslinkable rubber mixtures comprising silanized light-coloured filler, comprising the method according to one or more of Claims 8 to 11, wherein one or more crosslinking agents are added before, during and/or after the production of the rubber mixture.

13. Method of producing vulcanizates comprising the production of crosslinkable rubber mixtures comprising silanized light-coloured fillers by a method according to Claim 12, and a subsequent vulcanization at a temperature in the range from 100°C to 200°C.

14. Use of measurement devices for determining the sound wave amplitude and/or sound wave intensity at a frequency of the ultrasound waves within a range from 4 to 10 MHz, preferably from 5 to 7 MHz, for a method according to one of Claims 1 to 13.

**15.** Use of measurement devices according to Claim 14, wherein the attenuation coefficient is determined in the region of the frequency of the ultrasound waves.

**Revendications**

1. Procédé permettant de contrôler la silanisation de matières de charge claires, dans lequel un mélange contenant au moins une matière de charge claire silanisée issue du groupe des acides siliciques, de préférence des acides siliciques précipités ou des matières de charge biphasées, et au moins un caoutchouc est extrudé, le produit d'extrusion est exposé à des ondes ultrasonores dans une plage de fréquence de 4 à 10 MHz, de préférence de 5 à 7 MHz, et l'intensité de signal des ondes ultrasonores après transmission à travers le produit d'extrusion est déterminée.

2. Procédé selon la revendication 1, dans lequel le coefficient d'amortissement relatif $\alpha_{rel}$ du produit d'extrusion est déterminé dans la plage de fréquence des ondes ultrasonores.

3. Procédé selon la revendication 1 ou 2, dans lequel en plus le coefficient de variation du logarithme de l'intensité des ondes ultrasonores ou de l'amplitude des ondes ultrasonores In A est établi et utilisé pour le contrôle de la dispersion de la matière de charge claire dans le produit d'extrusion.

4. Procédé selon une ou plusieurs des revendications 1 à 3, dans lequel aussi l'écart type du coefficient d'amortissement relatif $\alpha_{rel}$ est établi et utilisé pour le contrôle de la dispersion de la matière de charge claire dans le produit d'extrusion.

5. Procédé selon une ou plusieurs des revendications 1 à 4, dans lequel la distance entre un émetteur qui émet les ondes ultrasonores et un récepteur qui reçoit les ondes ultrasonores est supérieure à 5 mm, de préférence comprise entre 10 mm et 25 mm, de façon particulièrement préférée entre 15 et 20 mm.

6. Procédé selon une ou plusieurs des revendications 1 à 5, dans lequel la matière de charge est contenue dans le mélange de caoutchouc à raison de 50 à 250 phr, de préférence de 60 à 150, et de façon particulièrement préférée de 70 à 100 phr.

7. Procédé selon une ou plusieurs des revendications 1 à 6, dans lequel la matière de charge silanisée est formée dans l'extrudeuse à partir d'au moins une matière de charge claire issue du groupe des acides siliciques, de préférence des acides siliciques précipités, ou des matières de charge biphasées, et d'au moins un agent de silanisation.

8. Procédé de fabrication de mélanges de caoutchouc contenant des matières de charge claires silanisées, dans lequel au moins une matière de charge claire issue du groupe des acides siliciques, de préférence des acides siliciques précipités ou des matières de charge biphasées, est mélangée avec au moins un caoutchouc et au moins un agent de silanisation, et est silanisée, et dans lequel au moins une partie, de préférence plus de 1 % en volume, de manière particulièrement préférée plus de 10 % en volume, de la plus grande préférence 100 % en volume du mélange de caoutchouc sont contrôlés par le procédé selon une ou plusieurs des revendications 1 à 7.

9. Procédé selon la revendication 7 ou 8, dans lequel la silanisation est effectuée à une température de 140 à 160 °C.

10. Procédé selon la revendication 8 ou 9, dans lequel le procédé fonctionne en continu ou sous forme de procédé par lots, de préférence en continu.

11. Procédé selon une ou plusieurs des revendications 8 à 10, dans lequel un silane, de préférence le bis[3-(triéthoxysilyl)propyl]tétrasulfure est utilisé comme agent de silanisation.

12. Procédé de fabrication de mélanges de caoutchouc réticulables, contenant des matières de charge claires silanisées, comprenant le procédé selon une ou plusieurs des revendications 8 à 11, dans lequel avant, pendant et/ou après la fabrication du mélange de caoutchouc, un ou plusieurs agents de réticulation est/sont ajouté(s).

13. Procédé de fabrication de produits de vulcanisation comprenant la fabrication de mélanges de caoutchouc réticulables, contenant des matières de charge claires silanisées, selon un procédé selon la revendication 12, et une vulcanisation consécutive à une température dans la plage de 100 °C à 200 °C.

**14.** Utilisation de dispositifs de mesure pour déterminer l'amplitude d'onde sonore et/ou l'intensité d'onde sonore à une fréquence des ondes ultrasonores dans une plage de 4 à 10 MHz, de préférence de 5 à 7 MHz, pour un procédé selon l'une quelconque des revendications 1 à 13.

**15.** Utilisation de dispositifs de mesure selon la revendication 14, dans lequel le coefficient d'amortissement est déterminé dans la plage de la fréquence des ondes ultrasonores.

Fig. 1

Fig.2

Fig.3

Abb. 1Fig. 4: Inline Qualitätskontrolle für die Mischungscharge R1D1

Abb. 2Fig. 5: Inline Qualitätskontrolle für die Mischungscharge R2D1

Abb. 3Fig. 6: Inline Qualitätskontrolle für die Mischungscharge R3D1

Abb. 4Fig. 7: Inline Qualitätskontrolle für die Mischungscharge R4D1

Abb. 5Fig. 8: Inline Qualitätskontrolle für die Mischungscharge R5D2

Abb. 6Fig. 9: Abhängigkeit des relativen Schalldämpfungskoeffizienten von der Frequenz für die Mischungschargen R1D1 bis R5D2 aus Tabelle 4

Abb. 7Fig. 10: Korrelation der relativen Schalldämpfungskoeffizienten mit der Mooneyviskosität

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 69728538 T2
- EP 0911359 A
- EP 1357156 A
- EP 2314442 A
- EP 2009058041 W
- DE 102008040138 A

**In der Beschreibung aufgeführte Nicht-Patentliteratur**

- **F. RÖTHEMEYER ; F. SOMMER.** Kautschuktechnologie Werkstoffe, Verarbeitung Produkte. Hanser Verlag, 272
- **F. RÖTHEMEYER ; F. SOMMER.** Kautschuktechnologie Werkstoffe, Verarbeitung Produkte. Hanser Verlag, 390
- **HOCHREIN et al.** *Plastverarbeiter,* September 2009, 92
- **A. SCHRÖDER ; L. GRÄFF ; L. WAWRZINSKI.** *Rubber World,* 2015, vol. 251, 28
- *Rubber World,* 2015, vol. 251, 28
- **M. JAUNICH ; B. STARK ; B. HOSTER.** *Polymer Testing,* 2009, vol. 28, 84
- **A. SCHRÖDER ; L. GRÄFF ; L. WAWRZINSKI.** *Kautschuk Gummi Kunststoffe,* 2015, vol. 67, 11